# EUROPEAN PATENT APPLICATION

(11) **EP 4 821 408 A1**
(43) Date of publication of application: **14.10.2026**
(21) Application number: 24900896.2
(22) Date of filing: 08.11.2024
(51) Int. Cl.: A47G 21/18, C09D 1/00

(54) **OPEN-TYPE METAL STRAW**

(30) Priority: 04.12.2023 KR 20230173316
(71) Applicant: Song, Seung-Jong, Busan 46536 (KR)
(72) Inventor: Song, Seung-Jong, Busan 46536 (KR)
(74) Representative: dompatent
(86) International application number: PCT/KR2024/017695
(87) International publication number: WO 2025/121709

(57) **Abstract**

The present invention relates to an open-type metal straw and, more specifically, to an open-type metal straw which, by using a thin film material, is convenient to carry and store and is easy to wash and thus hygienically reusable.

The open-type metal straw according to an embodiment of the present invention comprises: a body portion which is rolled in a cylindrical shape with an inner surface and an outer surface overlapping each other by a quarter (1/4) or greater when unfolded in the lengthwise direction and wound in the width direction; and a coating portion including a film of a certain thickness on the surface of the body portion, wherein the body portion is reduced to a size having a height corresponding to a width W thereof when the inner surface is unfolded and the outer surface is wound in the lengthwise direction like a roll.

## Description

### [TECHNICAL FIELD]

The present invention relates to an open-type metal straw, and more specifically, to an open-type metal straw which is formed of a thin film material so that it is convenient to carry and store and is easy to wash and thus hygienically reusable.

### [BACKGROUND ART]

Generally, straws are used to consume liquid beverages. A conventional straw is manufactured using a plastic material having excellent durability, storage, and transportability and easy mass manufacturing, and is widely used for single use.

However, in recent years, as environmental problems for disposable plastic products have emerged, there has been an active movement to refrain from using disposable straws made of plastic.

Accordingly, a straw formed of a plastic material are also recommended to be replaced with straws formed of paper, wood, metal, and glass materials.

However, the straws formed of a paper material have structurally weak durability and are easily damaged by an external force during distribution, and thus often fail to function as straws. In addition, in the case of the straws formed of a paper material, when the straws come into contact with a liquid for a long time, the straws softens and the shape of the straw itself is not maintained, thereby failing to function properly.

In addition, in the case of straws formed of a glass material, which may be repeatedly used, the manufacturing cost is expensive, and the straws may not be repeatedly used without washing and disinfection, resulting in inconvenience to carry.

Above all, the conventional straw maintains its own shape before and after use. Therefore, it is not easy to wash the inside of the conventional straw having a cylindrical shape extending in one direction. Therefore, the conventional straw is difficult to reuse from a sanitary point of view.

In order to solve these problems, Korean Patent Registration No. 10-2064716 has been proposed, entitled "Washable straw set".

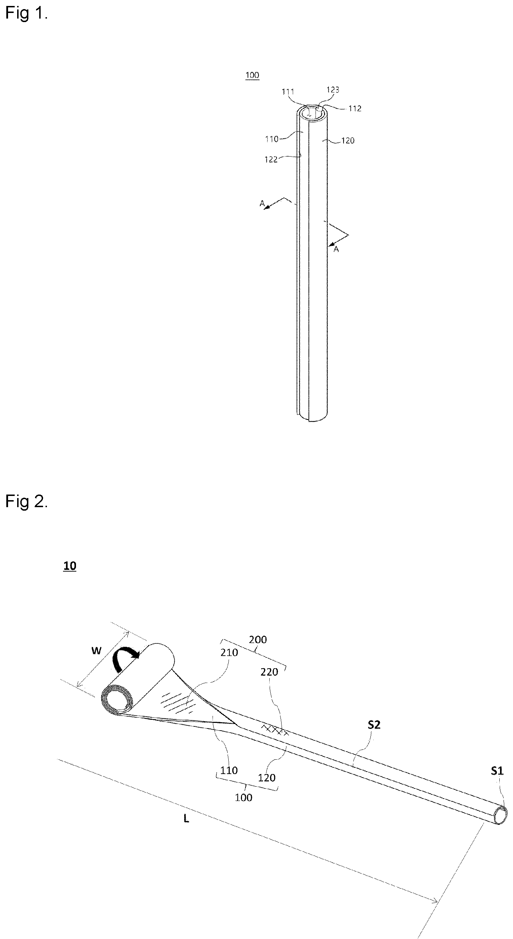

However, as shown in FIG. 1, the related art is very cumbersome and inconvenient to assemble a straw body 110 and a casing member 120, which extend in a longitudinal direction, to each other.

In addition, since the straw body 110 and the casing member 120 need to be separated from each other upon washing and the straw body 110 and the casing member 120 may be detached or separated from each other, so that if any one of the straw body 110 and the casing member 120 is lost, it may not function properly and it is inconvenient to carry or store.

### [DISCLOSURE]

### [TECHNICAL PROBLEM]

The present invention has been made in an effect to solve the above problems and needs, and an object of the present invention is to provide an open-type metal straw which is formed of a thin film material so that it is convenient to carry and store and is easy to wash and thus hygienically reusable.

### [TECHNICAL SOLUTION]

To achieve the above object, an open-type metal straw according to one embodiment of the present invention includes: a body portion rolled in a cylindrical shape with an inner surface and an outer surface overlapping each other by a quarter (1/4) or greater when the body portion is unfolded in a longitudinal direction and wound in a width direction; and a coating portion including a film of a certain thickness on a surface of the body portion, in which the body portion is reduced to a size having a height corresponding to a width W thereof when the inner surface is unfolded and the outer surface is wound in a longitudinal direction like a scroll.

In addition, when the body portion is wound in a longitudinal direction or a width direction, the inner surface contracts while the outer surface expands, so that the body portion is wound.

In addition, when the body portion is unfolded in a certain direction such that both ends thereof in the width direction are away from each other, the inner surface is exposed so that the inner surface is washable.

In addition, the body portion is formed of a stainless steel material for a spring which returns to its original state when an external force is removed even if the body portion is deformed by the external force.

### [ADVANTAGEOUS EFFECTS]

According to the present invention, since the open-type metal straw is formed of the stainless steel material for a spring, which has a characteristic of being rolled into a circular shape, the open-type metal straw is easily washed while being unfolded into a plate shape, and is returned to its original shape to form a cylindrical shape, thereby enabling repetitive reuse.

In addition, when the body portion is wound in the longitudinal direction like a scroll, the open-type metal straw is wound to a size having a height corresponding to the width thereof, thereby reducing the size thereof and providing the advantage of convenient storage and carrying.

In addition, since the coating portion includes a thin coating film on the surface of the body portion, hygiene and cleanliness management is advantageous and cleaning may be simply performed.

### [DESCRIPTION OF DRAWINGS]

FIG. 1 is an exemplary perspective view showing a configuration of a conventional straw.
FIG. 2 is a perspective view showing a state of use of an open-type metal straw according to one embodiment of the present invention.
FIG. 3 is a perspective view showing the open-type metal straw according to one embodiment of the present invention.
FIG. 4 are views showing an unfolded state of the open-type metal straw according to one embodiment of the present invention.
FIG. 5 is a perspective view showing a state of use of an open-type metal straw according to another embodiment of the present invention.
FIG. 6 are views showing a tube holder of the open-type metal straw according to another embodiment of the present invention.
FIG. 7 is a perspective view showing a state of use of the tube holder of the open-type metal straw according to another embodiment of the present invention.
FIG. 8 is a view showing a state of storing the open-type metal straw according to another embodiment of the present invention.

### [BEST MODE]

Since the present invention may make various changes and have various embodiments, specific embodiments will be illustrated in the drawings and described in detail in the detailed description.

However, this is not intended to limit the present invention to specific embodiments, and it should be understood that the present invention includes all modifications, equivalents, and substitutes included in the technical spirit and technical scope of the present invention.

The terms used herein are only for the purpose of describing particular embodiments and are not intended to limit the present invention. The singular expression also includes the plural meaning as long as it does not differently mean in the context.

In the present specification, the term such as "include" or "have" in various embodiments of the present specification is intended to designate the presence of stated features, numbers, steps, operations, components, parts, or combinations thereof, but does not preclude the presence or addition of one or more other features, numbers, steps, operations, components, parts, or combinations thereof.

The terms including an ordinal number such as "first" or "second' may be used for the names of various components, not limiting the components. The above terms are used merely for the purpose of distinguishing one component from another component.

In addition, the components of the embodiments described with reference to each drawing are not limited to the corresponding embodiments, and may be implemented to be included in other embodiments within a range in which the technical spirit of the present invention is maintained, and it is natural that even if a separate description is omitted, a plurality of embodiments may be implemented again as one integrated embodiment.

In addition, in the description with reference to the accompanying drawings, like reference numerals refer to like or related components regardless of reference numerals, and redundant descriptions thereof will be omitted.

In describing the present invention, a detailed description of related known technologies incorporated herein will be omitted when it is determined that the detailed description thereof may unnecessarily obscure the subject matter of the present invention.

The present invention proposes an open-type metal straw which solves the problems of conventional straw to be described below, is easy to carry and store, and is easy to wash and thus hygienically reusable.

The conventional straw maintains its own shape before and after use. Therefore, it is not easy to clean the inside of the conventional straw having a cylindrical shape that is long in one direction. Therefore, the conventional straw is difficult to reuse from a sanitary point of view.

In addition, the related art entitled "washable straw set" has many problems that it is cumbersome and inconvenient to assemble, and if one of components is lost, it may not function properly, and it is still very inconvenient to carry or store.

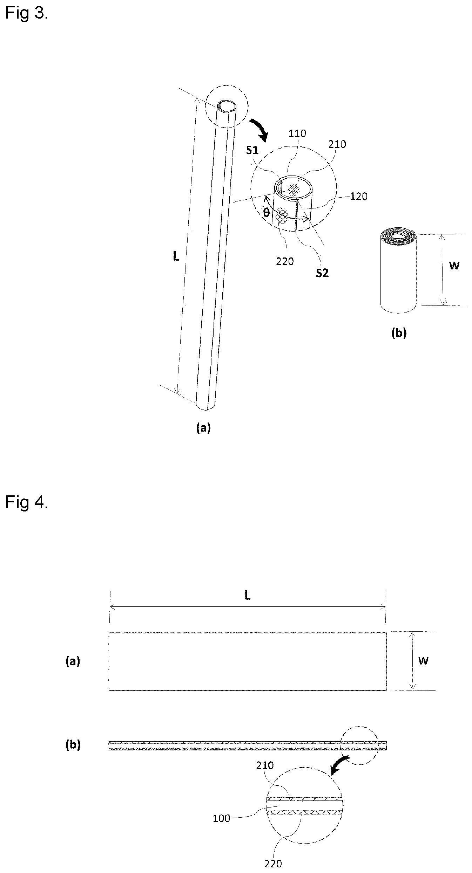

FIG. 2 is a perspective view showing a state of use of an open-type metal straw according to one embodiment of the present invention, FIG. 3 is a perspective view showing the open-type metal straw according to one embodiment of the present invention, and FIG. 4 are views showing an unfolded state of the open-type metal straw according to one embodiment of the present invention.

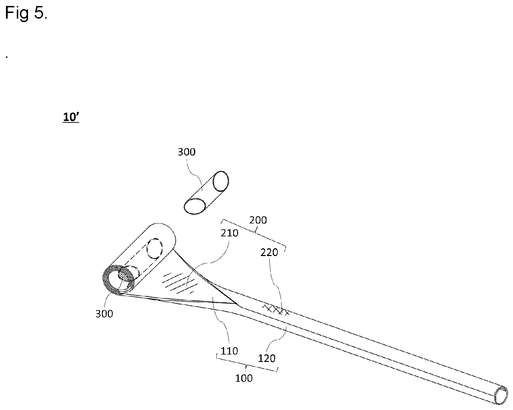

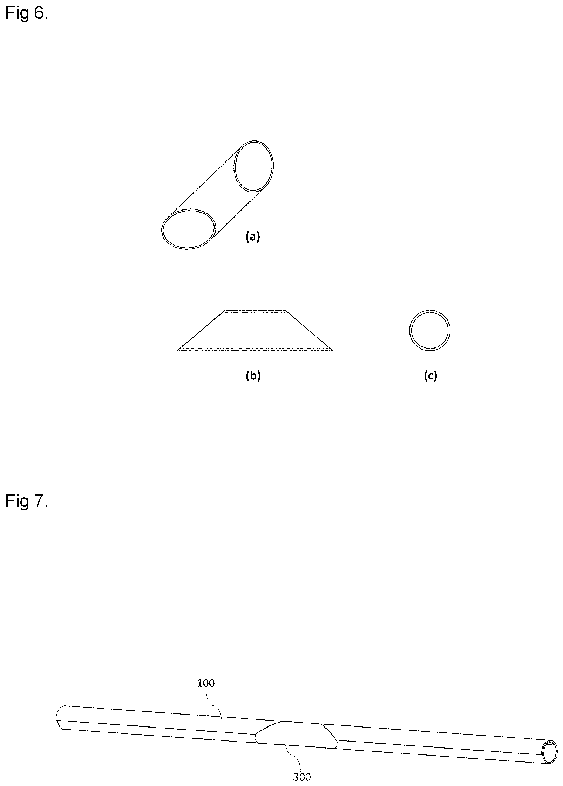

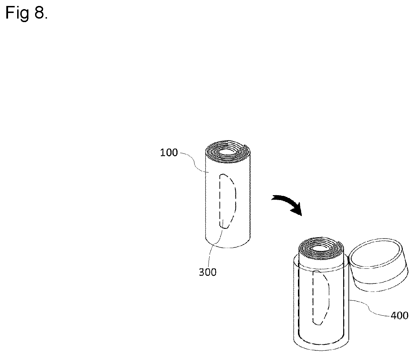

FIG. 5 is a perspective view showing a state of use of an open-type metal straw according to another embodiment of the present invention, FIG. 6 are views showing a tube holder of the open-type metal straw according to another embodiment of the present invention, FIG. 7 is a perspective view showing a state of use of the tube holder of the open-type metal straw according to another embodiment of the present invention, and FIG. 8 is a view showing a state of storing the open-type metal straw according to another embodiment of the present invention.

Referring to the above drawings, an open-type metal straw 10 according to one embodiment of the present invention includes: a body portion 100 rolled in a cylindrical shape with an inner surface 110 and an outer surface 120 overlapping each other by a quarter (1/4) or greater when the body portion 100 is unfolded in a longitudinal direction (L) and wound in a width direction (W); and a coating portion 200 including a film of a certain thickness on a surface of the body portion 100, in which the body portion 100 is reduced to a size having a height corresponding to a width W thereof when the inner surface 110 is unfolded and the outer surface 120 is wound in the longitudinal direction (L) like a scroll.

In addition, when the body portion 100 is wound in the longitudinal direction (L) or the width direction (W), the inner surface 110 contracts while the outer surface 120 expands, so that the body portion 100 is wound.

In addition, when the body portion 100 is unfolded in a certain direction such that both ends thereof in the width direction (W) are away from each other, the inner surface 110 is exposed so that the inner surface 110 is washable.

In addition, the body portion 100 is formed of a stainless steel material for a spring which returns to its original state when an external force is removed even if the body portion 100 is deformed by the external force.

In addition, the coating portion 200 may include a first coating portion 210 configured to form a coating layer on the inner surface 110, and a second coating portion 220 configured to form a coating layer on the outer surface 120, the first coating portion 210 may be formed of synthetic resin or inorganic ceramic, and the second coating portion 220 may be formed of synthetic resin or heat-resistant film.

In addition, the open-type metal straw 10 may further include a tube holder 300 configured to form an inner core shaft to easily wind the body portion 100 in the longitudinal direction (L), and wound in the width direction (W) to surround the outer surface 120 when the body portion 100 is formed in a longitudinal direction (L), thereby holding the body portion 100 so as to maintain a shape of the body portion 100 in the longitudinal direction (L).

In addition, the tube holder 300 may have a trapezoidal sectional shape, in which upper and lower sides of the tube holder 300 are opened in an elliptical shape while being inclined with respect to a longitudinal direction thereof.

In addition, the open-type metal straw 10 may further include a tube case 400 configured to accommodate the body portion 100 that is wound in the longitudinal direction (L) and rolled in a size having a height corresponding to the width W thereof.

The configuration and operation of the open-type metal straw 10 according to embodiments of the present invention will be described in detail as follows.

As shown in FIGS. 2, 3, and the like, the open-type metal straw 10 according to one embodiment of the present invention is formed of a thin film material so that it is convenient to carry and store and is easy to wash the inside thereof and thus hygienically reusable. To this end, the open-type metal straw 10 according to one embodiment of the present invention may include a body portion 100 and a coating portion 200.

When the body portion 100 is unfolded in the longitudinal direction (L) and wound in the width direction (W), the body portion 100 is rolled in a cylindrical shape with the inner surface 110 and the outer surface 120 overlapping each other by a quarter (1/4) or greater, thereby forming a cylindrical shape in which the inner surface 110 and the outer surface 120 are formed on inner and outer sides, respectively, such that an inside of the body portion 100 is sealed. In this case, the body portion 100 according to one embodiment of the present invention is rolled in the width direction (W), the inner surface 110 and the outer surface 120 make close contact with each other at a region where the inner surface 110 and the outer surface 120 overlap each other. In addition, as shown in FIG. 3, an overlapping angle θ of the body portion 100 needs to be at least equal to the quarter (1/4) of a circumference thereof or less than the entire length of the circumference. Meanwhile, the body portion 100 is formed of a thin film non-ferrous metal material and has a thickness of 0.02 to 0.07 mm.

As illustrated in FIG. 3(a), the body portion 100 may be formed in a cylindrical shape extending in one direction, and is formed inside of the body portion 100 with a flow path through which a beverage such as water or coffee may flow in the longitudinal direction (L).

In addition, a lower end of the body portion 100 in the longitudinal direction is opened such that the beverage contained in a container may be introduced thereinto. Correspondingly, an upper end of the body portion 100 in the longitudinal direction is opened such that the introduced beverage is discharged to the outside. Accordingly, the body portion 100 having the opened upper and lower sides communicates with the outside through the upper and lower ends in the longitudinal direction.

In particular, when the outer surface 120 of the body portion 100 is wound in the longitudinal direction (L) like a scroll while unfolding the inner surface 110, as shown in FIG. 3(b), the body portion 100 may be wound at a height corresponding to the width W thereof and may be reduced in size, so that it is very convenient to carry or store.

In this case, when the body portion 100 is wound in the longitudinal direction (L) or the width direction (W), the inner surface 110 contracts while the outer surface 120 expands, so that the body portion 100 naturally form a cylindrical shape. This is because of properties of the material of the body portion 100, which will be described in detail later.

Meanwhile, in the unfolded state of the body portion 100 as shown in FIG. 4(a), it is necessary to limit the size of the length L and the width W according to the use of the straw 10 proposed by the present invention.

That is, when the length L of the body portion 100 is too large than the width W, the body portion 100 may be easily bent and the beverage may not be smoothly sucked, and if the length L is relatively too small than the width W, a space in which the beverage may be sucked may be too large to increase a suction force, which may be very inconvenient to a user.

Therefore, the body portion 100 proposed by the present invention has a range in which the length L in the longitudinal direction is at least 5 times or more and 20 times or less than the width W in the width direction with reference to Table 1 below.

### Applicable Straw Specification (unit: mm)

**[Table 1]**

| Diameter (Φ) | Length (L) | Width (W) | Length (L)/Width (W) |
|---|---|---|---|
| 5 | 100 to 300 | 20 to 45 | |
| 6 | | | |
| 7 | | | |
| 8 | | | 5 to 20 times |
| 10 | 150 to 500 | 30 to 65 | |
| 12 | | | |
| | | | |
| | | | |

In particular, the body portion 100 proposed by the present invention is formed of a non-ferrous metal of a stainless steel material for a spring which has a circular elastic restoring force using the property of a spring material that returns to its original state when an elastic force is removed even if the body portion 100 is deformed by the external force.

More specifically, the body portion 100 is formed of stainless steel SUS 304 (or SUS 301) and has a circular elastic restoring force, and thus has a special advantage of being able to replace an expensive shape memory alloy.

In addition, since the body portion 100 allows the beverage such as water or coffee to flow along the inner surface 110 wound in a circular shape, the inner surface 110 of the body portion 100 makes direct contact with the beverage. Therefore, in order to hygienically and repeatedly reuse the straw 10, the inner surface 110 of the body portion 100 needs to be washed.

Since the body portion 100 according to one embodiment of the present invention is formed of a thin film non-ferrous metal for a spring, the body portion 100 may be pressed and unfolded in the longitudinal direction (L) or the width direction (W). Therefore, when the body portion 100 is unfolded in a certain direction such that both ends thereof in the width direction (W) are away from each other, the inner surface 110 is exposed so that the inner surface 110 is washable.

In addition, since the body portion 100 is formed of a non-ferrous metal, hot water disinfection is possible, and when an external force of pressing with a circular elastic restoring force of a spring material is removed, the body portion 100 may be elastically restored to its original shape without requiring a separate operation. That is, the body portion 100 is formed of a stainless steel material for a spring which returns to its original state when an external force is removed even if the body portion 100 is deformed by the external force.

Furthermore, the body portion 100 is configured such that a front end S1, which is rolled inward in the width direction (W), is less bent radially inward to make closer contact with the inner surface 110 toward the outer side, and a rear end S2, which is rolled inward in the width direction (W), further makes closer contact with the outer surface radially inward toward the inner side.

As illustrated in FIGS. 2 to 4, the coating portion 200 may include a film of a certain thickness on the surface of the body portion 100, thereby protecting the body portion 100 and maintaining cleanliness to prevent abrasion or scratches. In particular, since the body portion 100 is a very thin film (0.02 to 0.07 mm), the coating portion 200 may solve the problem of being very inconvenient to use because the body portion 100 is easily bent or sharp.

Since the coating portion 200 includes a film formed by coating the entire body portion 100 to a predetermined thickness, the coating portion 200 may decorate the exterior of the body portion while protecting the body portion 100. In addition, the coating portion 200 may be coated with synthetic resin by applying the synthetic resin to the entire surface of the body portion 100 at a predetermined thickness.

For reference, the synthetic resin is a polymer material having plasticity obtained by reacting a low-molecular-weight organic chemical material obtained through petroleum, natural gas, or the like through heating or the like, and is widely used in various fields due to low electrical and thermal conductivity and high strength.

Therefore, the coating portion 200 may be formed by thinly coating the body portion 100 with synthetic resin to have various mechanical and physical properties, and particularly, may maintain durability of the body portion 100. In addition, since the coating portion 200 forms a coating film having a certain thickness when the body portion 100 is washed, it is possible to wash the body portion 100 with hands without the need for a separate washing brush.

In addition, since the coating portion 200 is formed of synthetic resin that is the same material as the body portion 100, it is possible to improve adhesion to an area in contact with the synthetic resin, so that there is no difficulty in maintaining the longitudinal direction of the wound body portion 100 in a straw shape.

FIG. 4(a) is a plan view exemplarily showing the open-type metal straw 10 according to one embodiment of the present invention, and FIG. 4(b) is a sectional view exemplarily showing the open-type metal straw 10 according to one embodiment of the present invention.

As shown in FIG. 4(b), the coating portion 200 may include the first coating portion 210 configured to form the coating layer on the inner surface 110, and the second coating portion 220 configured to form the coating layer on the outer surface 120.

Since the first coating portion 210 includes the coating layer on the inner surface 110, hygiene or cleanliness may be essential because the beverage makes direct contact with the coating portion 210. Therefore, the first coating portion 210 may be formed of synthetic resin or inorganic ceramic.

The first coating portion 210 may have heat resistance, abrasion resistance, solvent resistance, discoloration resistance, non-adhesiveness, and incombustibility by coating the inner surface 110 with inorganic ceramic, and may have an effect harmless to the human body, and may have an effect of emitting far-infrared rays, emitting anions, and having excellent antibacterial and antifungal properties by adding a functional ceramic powder.

Since the second coating portion 220 forms the coating layer on the outer surface 120, the second coating portion 200 may be formed of synthetic resin or a heat-resistant film to protect the body portion 100 from external impact, scratches, abrasion due to use, or the like. In this case, the heat-resistant film has excellent heat resistance and may prevent the body portion 100 from being damaged even when bent sharply. However, since the heat-resistant film is a known technology, a function or feature thereof may be understood even if a more detailed description is omitted.

As shown in FIGS. 5 to 7, and the like, the tube holder 300 is a holder configured to form an inner core shaft to easily wind the body portion 100 in the longitudinal direction (L), and wound in the width direction (W) to surround the outer surface 120 when the body portion 100 is formed in the longitudinal direction (L), thereby holding the body portion 100 so as to maintain the shape of the body portion 100 in the longitudinal direction (L).

That is, the tube holder 300 may form the inner core shaft to easily roll the body portion 100 when the body portion 100 is wound in the longitudinal direction (L), and may be supported by the inner core shaft so as to press the body portion 100 such that the body portion 100 is easily wound while preventing crumple or scratching due to inward winding.

FIG. 6(a) is a perspective view of the tube holder 300 according to one embodiment of the present invention, FIG. 6(b) is a front view of the tube holder 300, and FIG. 6(c) is a side view of the tube holder 300.

In particular, as shown in FIG. 6, the tube holder 300 has a trapezoidal sectional shape, in which upper and lower sides of the tube holder are opened in an elliptical shape while being inclined with respect to the longitudinal direction thereof, so that it is very advantageous because the inside of the tube holder 300 is significantly exposed and it is also convenient when the tube holder 300 is detachably inserted into the body portion 100 in the longitudinal direction or the width direction.

In addition, as shown in FIG. 7, the tube holder 300 may be wound in the width direction (W) to surround the outer surface 120 when the body portion 100 is formed in the longitudinal direction (L), thereby holding the body portion 100 to maintain the shape of the body portion 100 in the longitudinal direction.

As shown in FIG. 8, the tube case 400 is a case that may accommodate the body portion 100 that is wound in a longitudinal direction (L) and formed to have a height corresponding to the width W thereof, which may have a cylindrical shape or may be opened and closed by attaching a lid thereto.

Although not specifically shown, the tube case 400 may be breathable, so that moisture in the tube case 400 may be easily released to maintain cleanliness, and a surface thereof may be uneven in an embossed shape in order to increase a grip feeling. In addition, the tube case 400 may be easily gripped because a handle string is formed on one side thereof for easy carrying. In addition, the tube case 400 may form a luxurious appearance by displaying characters, figures, letters, or the like on the surface thereof.

As described above, the open-type metal straw 10 according to the embodiments of the present invention may expect the following effects.

According to the present invention, since the body portion 100 formed of a stainless steel material for a spring, which has a characteristic of being rolled into a circular shape, is used, the open-type metal straw is easily washed while being unfolded into a plate shape, and is returned to its original shape to form a cylindrical shape, thereby enabling repetitive reuse.

In addition, the straw 10 of the present invention, which is reusable, has an advantage in that the straw 10 is used as a substitute for the conventional straw in order to obtain environmental effects while solving negative factors such as environmental pollution and waste caused by conventional disposable mass consumption.

In addition, when the inner surface 110 is unfolded and the outer surface 120 is wound in the longitudinal direction (L) like a scroll, the body portion 100 is reduced in size while being wound to a size having a height corresponding to the width W thereof, so that it is possible to easily store and carry.

In addition, since the coating portion 200 includes a coating film on the surface of the body portion 100, hygiene and cleanliness management is advantageous and cleaning may be simply performed.

In addition, since the straw 10 of the present invention, which is repeatedly reusable by washing, is used, it is possible to obtain a positive advantage on market changes due to environmental protection and tightening straw regulations.

The above description illustrates the technical idea of the present invention, and it will be understood by those skilled in the art to which the present invention belongs that various modifications, changes, and substitutions may be made without departing from the scope of the essential characteristics of the present invention.

Therefore, the embodiments disclosed herein are to explain the present invention, rather than used to limit the technical spirit of the present invention, and the scope of the technical spirit of the present invention is not limited by those embodiments.

The protection scope of the present invention should be interpreted by the following claims, and all technical spirits within the scope equivalent thereto should be interpreted as being included in the scope of the present invention.

## Claims

1. An open-type metal straw comprising:
a body portion rolled in a cylindrical shape with an inner surface and an outer surface overlapping each other by a quarter (1/4) or greater when the body portion is unfolded in a longitudinal direction and wound in a width direction; and
a coating portion including a film of a certain thickness on a surface of the body portion,
wherein the body portion is reduced to a size having a height corresponding to a width thereof when the inner surface is unfolded and the outer surface is wound in a longitudinal direction like a scroll.

2. The open-type metal straw of claim 1, wherein, when the body portion is wound in a longitudinal direction or a width direction, the inner surface contracts while the outer surface expands, so that the body portion is wound.

3. The open-type metal straw of claim 1, wherein, when the body portion is unfolded in a certain direction such that both ends thereof in a width direction are away from each other, the inner surface is exposed so that the inner surface is washable.

4. The open-type metal straw of claim 1, wherein the body portion is formed of a stainless steel material for a spring which returns to its original state when an external force is removed even if the body portion is deformed by the external force.

5. The open-type metal straw of claim 1, wherein the coating portion includes a first coating portion configured to form a coating layer on the inner surface, and a second coating portion configured to form a coating layer on the outer surface,
the first coating portion is formed of synthetic resin or inorganic ceramic, and
the second coating portion is formed of synthetic resin or heat-resistant film.

6. The open-type metal straw of claim 1, further comprising a tube holder configured to form an inner core shaft to easily wind the body portion in a longitudinal direction, and wound in the width direction to surround the outer surface when the body portion is formed in a longitudinal direction, thereby holding the body portion so as to maintain a shape of the body portion in a longitudinal direction.

7. The open-type metal straw of claim 6, wherein the tube holder has a trapezoidal sectional shape, in which upper and lower sides of the tube holder are opened in an elliptical shape while being inclined with respect to a longitudinal direction thereof.

8. The open-type metal straw of claim 1, further comprising a tube case configured to accommodate the body portion that is wound in a longitudinal direction and rolled in a size having a height corresponding to a width thereof.
